## Europäisches Patentamt

## European Patent Office

## Office européen des brevets

(19)

(11) Veröffentlichungsnummer: **0 154 919**
**B1**

(12) # EUROPÄISCHE PATENTSCHRIFT

(45) Veröffentlichungstag der Patentschrift:
**13.05.87**

(51) Int. Cl.⁴: **C 09 C 1/22,** C 01 G 49/00

(21) Anmeldenummer: **85102437.2**

(22) Anmeldetag: **05.03.85**

(54) **Verfahren zur Herstellung von gelbbraunen Zinkferritpigmenten.**

(30) Priorität: **16.03.84 DE 3409722**

(43) Veröffentlichungstag der Anmeldung:
**18.09.85 Patentblatt 85/38**

(45) Bekanntmachung des Hinweises auf die Patenterteilung:
**13.05.87 Patentblatt 87/20**

(84) Benannte Vertragsstaaten:
**DE GB IT**

(56) Entgegenhaltungen:
**CHEMICAL ABSTRACTS, Band 95, Nr. 24, Dezember 1981, Seite 82, Nr. 205512b, Columbus, Ohio, US; & JP - A - 81 106 961 (TODA KOGYO CORP.) 25.08.1981**

(73) Patentinhaber: **BAYER AG, Konzernverwaltung RP Patentabteilung, D-5090 Leverkusen 1 Bayerwerk (DE)**

(72) Erfinder: **Rademachers, Jakob, Dr., Hoeninghausstrasse 34, D-4150 Krefeld 12 (DE)**
Erfinder: **Turban, Karl-Heinz, Dr., Hoeninghausstrasse 59, D-4150 Krefeld 12 (DE)**
Erfinder: **Franz, Gerhard, Dr., Bodelschwinghstrasse 22, D-4150 Krefeld (DE)**
Erfinder: **Fuhr, Werner, Dr., Hoeninghausstrasse 40, D-4150 Krefeld 12 (DE)**
Erfinder: **Holle, Bernd, Dr., Bethelstrasse 52, D-4150 Krefeld (DE)**

# Beschreibung

Die vorliegende Erfindung befasst sich mit der Herstellung von gelbbraunen, temperaturbeständigen Farbpigmenten auf Zinkferrit-Basis. Sie betrifft insbesondere die Herstellung von anisometrischen Zinkferritpigmenten mit hervorragenden farbtechnischen Eigenschaften.

Zinkferrit kristallisiert im Spinellgitter und wird je nach stöchiometrischer Zusammensetzung, Zusatzstoffen, Teilchengrösse, Kristallform und Oberflächeneigenschaften als Ausgangsmaterial für Weichmagnete, als Korrosionsschutz- oder als Farbpigment eingesetzt. Die vorliegende Erfindung befasst sich mit der Herstellung von nicht ferrimagnetischen Farbpigmenten, die im angelsächsischen Sprachraum als «tans»-Pigmente bekannt geworden sind. Sie zeichnen sich durch hohe Thermostabilität und Reinheit aus. Sie werden deshalb anstelle von Mischungen aus Eisenoxidgelb und Eisenoxidrot dort eingesetzt, wo hohe Einfärbetemperaturen verlangt werden, beispielsweise bei der Einfärbung von Kunststoffen, Kalksandsteinen, Sandgranulaten, Einbrennlacken, Emails und Keramikglasuren.

Die Herstellung gelbbrauner Farbpigmente ist in der US-PS 3 832 455 beschrieben. Hiernach werden sie durch Fällen und Oxidieren des Eisens aus Eisen-II-sulfat-Lösungen in Gegenwart von Zinkoxid oder Zinkkarbonat bei pH-Werten von 5 bis 6 mit anschliessendem Filtrieren, Waschen, Trocknen und Glühen erhalten. Der Nachteil des Prozesses ist, dass bei der Fällung sehr genaue Temperaturen von 49 bis 52°C einzuhalten sind. Niedrigere Temperaturen führen zu unerwünschten Eisenoxidhydroxiden, höhere Temperaturen fördern die Bildung von nicht gewollten magnetischen Oxiden.

Gemäss dem Verfahren der US-PS 2 904 395 werden die Zinkferritpigmente sowohl durch gemeinsame Fällung aus den entsprechenden Eisen- und Zink-haltigen Lösungen mit anschliessendem Filtrieren, Waschen, Trocknen und Glühen als auch durch Glühen einer in wässeriger Suspension gewonnenen innigen Mischung aus fertigem Eisenoxidhydroxid und Zinkoxid hergestellt. Das Kalzinieren erfolgt bei Temperaturen von 750 bis 1000°C in 10 bis 30 Minuten mit anschliessendem langsamen Abkühlen des Reaktionsproduktes auf 400 bis 500°C innerhalb von 10 Minuten. Hierbei ist zur Erzielung von hellen brillanten Farbtönen eine beschleunigte Reaktion zur vollständigen Bildung des Zinkferrits bei der Glühung erforderlich. Anderenfalls werden unerwünschtes kristallwachstum, Versinterungen und ein bemerkenswerter Fehlbetrag an gebundenem Sauerstoff beobachtet. Zur Durchführung der Reaktion bei den angestrebten Bedingungen müssen chloridhaltige Katalysatoren, beispielsweise Salzsäure oder Zinkchlorid zugesetzt werden.

Der Nachteil dieses Verfahrens besteht darin, dass chloridhaltige Pigmente gewonnen werden, die in Anstrichmitteln korrosive Wirkung zeigen.

Aus der DE-A 3 136 279 sind chloridfreie farbreine Zinkferritpigmente bekannt, die dadurch erhalten werden, dass den Eisen- und Zink-haltigen Ausgangsmaterialien vor dem Glühen zusätzlich das Komponentensystem $Al_2O_3$ und $P_2O_5$ bildende Verbindung zugesetzt werden.

Die Aufgabe der vorliegenden Erfindung besteht nun darin, die erwähnten Nachteile der bisherigen Verfahren zur Gewinnung von brillanten, hellen, anisometrischen Zinkferritpigmenten zu vermeiden. Diese Aufgabe wird durch das erfindungsgemässe Verfahren gelöst, wobei nadelförmiges $\alpha$-FeOOH mit spezifischen Oberflächen nach BET von 15 bis 25 m²/g und mittleren Nadelbreiten von 0,025 bis 0,125 µm sowie mittleren Nadellängen von 0,2 bis 0,6 µm, erhalten aus Eisensalzlösungen durch Versetzen mit Alkali und anschliessender Oxidation in zwei Stufen, nämlich der Keimbildungs- und der Pigmentwachstumsstufe, mit ZnO einer spezifischen Oberfläche nach BET von über 2 m²/g homogen gemischt und bei Temperaturen von 700 bis 1000°C geglüht und nach dem Abkühlen gemahlen wird.

Als Ausgangsmaterialien für das erfindungsgemässe Herstellungsverfahren dienen technische Eisensalzlösungen und technisch gewonnenes Zinkoxid. Als Eisensalzlösungen werden bevorzugt wässerige Lösungen von Eisensulfat-Heptahydrat eingesetzt, das in grossen Mengen bei den Eisenmetall-Beizereien anfällt. Aber auch das Eisensulfat-Heptahydrat aus Titandioxidfabriken, die nach dem Sulfat-Verfahren mit Ilmeniten als Ausgangsmaterial arbeiten, kann eingesetzt werden. Die Gewinnung des $\alpha$-FeOOH aus diesen Lösungen erfolgt in der ersten Stufe, der Keimbildungsstufe, durch Zugabe von Alkalien, z.B. Natronlauge, Sodalösung oder Magnesit, in einer Menge, dass etwa die Hälfte des Eisens als Hydroxid gefällt wird. Anschliessend wird dieser Anteil zum FeOOH oxidiert, vorzugsweise durch Begasen in Rührbehältern mit Luft. Auch kann die Oxidation mit anderen Oxidationsmitteln, wie Nitraten oder Peroxiden erfolgen. Nach Beendigung des Oxidationsvorganges, der bei 30 bis 35°C abläuft, wird weitere Eisensulfatlösung zugefügt und die Suspension auf 70 bis 90°C aufgeheizt. Die Oxidation erfolgt nun unter Konstanthaltung des pH-Wertes zwischen 3,5 und 4,5 durch Zusatz von Alkalien. Der Vorgang dieser Pigmentbildung wird durch Zugabe weiterer Eisensulfatlösung soweit geführt, bis die erwünschte mittlere Nadelbreite von 0,025 bis 0,125 µm und mittlere Nadellänge von 0,2 bis 0,6 µm bei einer spezifischen Oberfläche nach BET von 15 bis 25 m²/g erreicht ist. Im allgemeinen stellen sich diese für das Zinkferritpigment günstigen Bedingungen am $\alpha$-FeOOH bei einem Aufwachsfaktor zwischen 5 und 10 ein. Man erhält demnach das 5 bis 10-fache an Goethit bezogen auf die eingesetzte Keimmenge.

Nach Filtrieren und gründlichem Waschen wird der Filterkuchen in Wasser wieder angemaischt und mit der gewünschten Zinkoxidmenge in einem Rührbehälter innig vermischt. Dabei ist es erforderlich, die Zinkoxidmenge so zu bemessen, dass ein Verhältnis von Eisen zu Zink, berechnet als $Fe_2O_3$ zu ZnO in Höhe von 2 bis 2,1 aufrecht erhalten wird. Hierdurch soll ein Überschuss an $Fe_2O_3$

über die stöchiometrische Zusammensetzung des Zinkferrits $ZnFe_2O_4$ in Höhe von 2 bis 7 Gew.-% $Fe_2O_3$ eingestellt werden. Abweichungen sowohl nach oben wie auch nach unten führen zu einem deutlichen Abfall der Helligkeit und des Gelbanteils im fertigen Pigment.

Nach dem Filtrieren der Suspension erfolgt die Aufgabe des Filterkuchens auf den Glühofen. Hierbei werden bevorzugt direkt beheizte Drehrohröfen eingesetzt. Die Glühdauer bei 900° C soll mindestens 10 Minuten betragen. Anschliessend gelangt der Ofenklinker zur Abkühlung, die bis etwa 400° C langsam innerhalb 2 bis 5 Minuten erfolgen soll. Bei plötzlichem Abkühlen tritt ein verlust der Helligkeit des Pigmentes auf. In diesem Fall kann durch nochmaliges Tempern bei 400 bis 500° C der helle Farbton wieder erhalten werden. Durch langsames Abkühlen oder nochmaliges Tempern kann auch der unerwünschte Ferrimagnetismus im fertigen Pigment, der leicht zu Entmischungen und Ausflockungen in Lacken oder Streifenbildung in Kunststoffen führen kann, vermieden werden. Bevorzugt ist auch ein Zusatz von 0,1 bis 1,0 Gew.-% auf fertiges Pigment bezogen, von Borsäure und/oder Borphosphat und/oder Borphosphat-bildenden Komponenten in einer Stufe vor dem Glühen, wodurch der Abkühleffekt weitgehend zurückgedrängt wird. Anstelle der Zusätze wird jedoch die Verlängerung der Abkühlzeit wegen der Reinheit des erhaltenen Zinkferrits und der einfacheren Verfahrensweise bevorzugt. Die Verlängerung der Abkühlzeit auf 2 bis 5 Minuten von 700 bis 1000° C auf 400 bis 500° C kann durch Zwischenschalten von Transportschnecken und eines nicht oder nur mit Luft gekühlten Drehrohres zwischen Kalzinierofen und Kühler erfolgen. Der so erhaltene Klinker wird anschliessend zum fertigen Pigment in üblichen Pigmentmühlen, wie Stift-, Kugel-, Rollen-, Pendel- oder Strahlmühlen gemahlen. Hierbei wird erfindungsgemäss ein normalerweise auftretender Helligkeitsverlust durch Zusatz spezieller Mahlhilfsmittel vermieden. Während übliche Mahlhilfsmittel, wie Glykole oder Amine keine Wirkung zeigen, bleibt durch Zusatz von 0,1 bis 0,5 Gew.-% Trimethylolpropan oder Methylhydrogenpolysiloxan die Helligkeit der Pigmente in voller Höhe erhalten. Gegenstand der vorliegenden Erfindung ist somit auch ein Verfahren, bei dem vor der Mahlstufe Trimethylpropan und/oder Methylhydrogenpolysiloxan oder deren Umsetzungsprodukte in Mengen von 0,1 bis 0,5 Gew.-%, auf Pigment bezogen, zugesetzt werden.

Das erhaltene Gelbbraunpigment besteht aus anisometrischen Teilchen mit mittleren Partikelbreiten von 0,1 bis 0,3 µm und mittleren Partikellängen von 0,5 bis 1 µm. Bei der objektiven Farbmessung und Auswertung im CIELAB-System (DIN 6 174) ist das Pigment im Vergleich zu marktüblichen Produkten deutlich heller, gelber und gesättigter bei gleicher Farbstärke. Das demnach farbreinere und brillantere Pigment weist weiterhin die Vorzüge einer besseren Dispergierbarkeit und niedrigeren Ölzahl auf. Die Temperaturbeständigkeit liegt gleich mit den bekannten Handelsprodukten. Demnach wird es wie diese bevorzugt in Einbrennlacken, Kunststoffen, Kalksandsteinen, Sandgranulaten und keramischen Glasuren eingesetzt werden können.

Gegenstand der Erfindung sind somit solche Produkte, die nach diesem Verfahren hergestellt wurden.

Anhand der nachfolgenden Beispiele wird die Erfindung näher erläutert, ohne dass dadurch eine Einschränkung der Erfindung bewirkt werden soll.

*Beispiel 1:*

Eine wässerige Lösung von aus Beizereien stammendem Eisensulfat mit 150 g/l $FeSO_4$ wird mit soviel 30 %iger Natronlauge unter Rühren versetzt, dass 40% des Eisens als Eisen(II)hydroxid gefällt werden. Durch anschliessendes Begasen mit Luft bei Temperaturen von 30 bis 35° C wird das gefällte Eisen bis zur dreiwertigen Stufe oxidiert. Dabei fällt der pH-Wert von anfänglich 6 auf 3,5. Damit ist die Keimbildung beendet.

Anschliessend wird weitere Eisensulfat-Lösung zugeführt und die Suspension auf 80° C erwärmt und bei Konstanthalten des pH-Wertes mit Natronlauge auf 4 weiter unter Rühren mit Luft begast. Dieses Vorgang wird soweit geführt, bis das 8-fache der bei der Keimbildung erhaltenen α-FeOOH-Menge erreicht ist. Nach dem Filtrieren und Waschen auf einem Drehfilter wird der Filterkuchen getrocknet.

50 kg des nun vorliegenden Goethits (entspr. 44 kg $Fe_2O_3$) mit einer spezifischen Oberfläche nach BET von 18 m²/g, einer mittleren Nadelbreite von 0,08 µm und einer mittleren Nadellänge von 0,5 µm werden zusammen mit 21,5 kg 99,6 %igem technischen Zinkoxid mit einer spezifischen Oberfläche nach BET von 4 m²/g in 600 kg Wasser intensiv suspendiert, filtriert, schliesslich 10 Minuten bei 900° C geglüht und innerhalb 3 Minuten auf 400° C abgekühlt. Vor dem Mahlen wird dem Klinker 0,6 Gew.-% einer 50 %igen wässerigen Trimethylolpropanlösung zugesetzt. Man erhält ein gelbbraunes Zinkferritpigment mit folgenden im Alkydal-®F48-Lack (Produkt der Bayer AG) nach DIN 53 236 gemessenen und nach DIN 6 174 umgerechneten CIELAB-C/2 grd-Farbwerten:

| | |
|---|---|
| Helligkeit L* | 52,1 (50,9) |
| Rotgrünanteil a* | 20,5 (19,7) |
| Gelbblauanteil b* | 37,9 (35,1) |
| Buntheit C* | 43,0 (40,2) |

Zum Vergleich sind in Klammern die Farbwerte eines marktüblichen Zinkferritpigments (Mapico ®TAN 10 der Firma Columbian Carbon Comp.) angegeben.

Das erfindungsgemäss erhaltene Pigment ist demnach wesentlich heller, gelber und gesättigter. Die anhand von elektronenmikroskopischen Aufnahmen festgestellten mittleren Partikelabmessungen betragen in der Breite ca. 0,2 µm und in der Länge 0,7 µm. Die Ölzahl nach DIN 53 199 liegt im Vergleich zu anderen anisometrischen Zinkferritpigmenten mit 17 g/100 g vorteilhaft niedrig.

*Beispiel 2:*

Zu der Eisenoxidhydroxid-Zinkoxid-Suspension aus Beispiel 1 werden vor der Filtration 165 g $H_3BO_3$ als 2 %ige Borsäure und 165 g $H_3PO_4$ als 85 %ige Phosphorsäure zugesetzt. Man erhält nach dem Filtrieren, Glühen bei 900° C und anschliessendem plötzlichen Abkühlen ein Pigment mit folgenden Farbwerten:

| | |
|---|---|
| Helligkeit L* | 52,1 (49,1) |
| Rotgrünanteil a* | 19,1 (19,0) |
| Gelbblauanteil b* | 35,7 (32,9) |
| Buntheit C* | 40,5 (37,3) |

In Klammern sind die Farbwerte eines Pigmentes nach plötzlichem Abkühlen ohne vorherigen Zusatz von Bor- und Phosphorsäure angegeben.

*Beispiel 3:*

Der nach Beispiel 1 erhaltene Klinker wird mit 0,3 Gew.-% Baysilon MH15 (Methylhydrogenpolysiloxan der Bayer AG) besprüht und anschliessend gemahlen. Man erhält ein Pigment mit gleichen Farbwerten wie in Beispiel 1.

## Patentansprüche

1. Verfahren zur Herstellung von anisometrischen, gelbbraunen Zinkferritpigmenten durch Glühen eines Eisenoxidhydroxid-Zinkoxid-Gemisches bei Temperaturen von 700 bis 1000° C, dadurch gekennzeichnet, dass nadelförmiges α-FeOOH mit spezifischen Oberflächen nach BET von 15 bis 25 $m^2/g$ und mittleren Nadelbreiten von 0,025 bis 0,125 µm sowie mittleren Nadellängen von 0,2 bis 0,6 µm, erhalten aus Eisensalzlösungen durch Versetzen mit Alkali und anschliessender Oxidation in zwei Stufen, nämlich der Keimbildungs- und der Pigmentwachstumsstufe, mit Zinkoxid einer spezifischen oberfläche nach BET von über 2 $m^2/g$ homogen gemischt, geglüht und nach dem Abkühlen gemahlen wird.

2. Verfahren gemäss Anspruch 1, dadurch gekennzeichnet, dass die Keimbildung der α-FeOOH-Herstellung bei 30 bis 35° C und die Pigment-Herstellung bei 70 bis 90° C sowie bei pH-Werten zwischen 3,5 und 4,5 erfolgt.

3. Verfahren gemäss einem der Ansprüche 1 oder 2, dadurch gekennzeichnet, dass bei der α-FeOOH-Bildung ein Aufwachsfaktor von 5 bis 10 eingehalten wird.

4. Verfahren gemäss Anspruch 1, dadurch gekennzeichnet, dass die Abkühlung des heissen Zinkferritklinkers auf 400 bis 500° C in einer Zeit von 2 bis 5 Minuten erfolgt.

5. Verfahren gemäss Anspruch 1, dadurch gekennzeichnet, dass dem gemisch von Eisenoxidhydroxid und Zinkoxid vor der Glühung 0,1 bis 1,0 Gew.-% auf fertiges Pigment bezogen Borsäure, Borphosphat und/oder Borphosphat-bildende Komponenten zugesetzt werden und die Kühlung nach dem Glühen rasch erfolgt.

6. Verfahren gemäss einem der Ansprüche 1 oder 5, dadurch gekennzeichnet, dass ein Gewichtsverhältnis von Eisenoxidhydroxid zu Zinkoxid zwischen 2,0 und 2,1, gerechnet als $Fe_2O_3$ : ZnO, eingehalten wird.

7. Verfahren gemäss einem der Ansprüche 1 oder 6, dadurch gekennzeichnet, dass vor der Mahlstufe Trimethylolpropan und/oder Methylhydrogenpolysiloxan oder deren Umsetzungsprodukte in Mengen von 0,1 bis 0,5 Gew.-%, auf Pigment bezogen zugesetzt werden.

## Revendications

1. Procédé pour la fabrication de pigments brun-jaune anisométriques de ferrite de zinc par calcination d'un mélange oxyde-hydroxyde de fer-oxyde de zinc à des températures de 700 à 1000° C, caractérisé en ce que l'on mélange de manière homogène du FeOOH α aciculaire ayant des surfaces spécifiques selon BET de 15 à 25 $m^2/g$ et des largeurs moyennes d'aiguilles de 0,025 à 0,125 µm et des longueurs moyennes d'aiguilles de 0,2 à 0,6 µm, obtenu à partir de solutions de sels de fer par addition d'alcali suivie d'oxydation en deux étapes, à savoir l'étape de formation des germes et l'étape de croissance du pigment, avec de l'oxyde de zinc d'une surface spécifique selon BET de plus de 2 $m^2/g$, on calcine et on broie après refroidissement.

2. Procédé selon la revendication 1, caractérisé en ce que la formation de germes de la fabrication de FeOOH α s'effectue à 30-35° C et la fabrication du pigment à 70-90° C et à des pH compris entre 3,5 et 4,5.

3. Procédé selon l'une des revendications 1 ou 2, caractérisé en ce que l'on maintient dans la formation de FeOOH α un facteur de croissance de 5 à 10.

4. Procédé selon la revendication 1, caractérisé en ce que le refroidissement du clinker de ferrite de zinc chaud à 400-500° C s'effectue en une durée de 2 à 5 min.

5. Procédé selon la revendication 1, caractérisé en ce que l'on ajoute au mélange d'oxyde-hydroxyde de fer et d'oxyde de zinc avant la calcination 0,1 à 1,0% en poids d'acide borique, de phosphate de bore et/ou de composants formant du phosphate de bore, par rapport au pigment final, et le refroidissement a lieu rapidement après la calcination.

6. Procédé selon l'une des revendications 1 ou 5, caractérisé en ce que l'on maintient un rapport pondéral de l'oxyde-hydroxyde de fer à l'oxyde de zinc, calculé en $Fe_2O_3$ : ZnO, compris entre 2,0 et 2,1.

7. Procédé selon l'une des revendications 1 ou 6, caractérisé en ce que l'on ajoute avant l'étape de broyage du triméthylolpropane et/ou du méthylhydrogénopolysiloxanne ou leurs produits de réaction en quantités de 0,1 à 0,5% en poids par rapport au pigment.

## Claims

1. Process for the production of anisometric, yellow-brown zinc ferrite pigments by annealing an iron oxide hydroxide/zinc oxide mixture at temperatures of 700 to 1,000° C, characterised in that needle-shaped α-FeOOH having specific BET surface areas of 15 to 25 m²/g and average needle widths of 0.025 to 0.125 μm as well as average needle lengths of 0.2 to 0.6 μm, obtained from iron salt solutions by mixing with alkali and subsequent oxidation in two stages, namely the nucleation stage and the pigment growth stage, is homogeneously mixed with zinc oxide having a specific BET surface area of more than 2 m²/g, annealed, and, after cooling, ground.

2. Process according to Claim 1, characterised in that the nucleation in the production of α-FeOOH is carried out at 30 to 35° C and the pigment production is carried out at 70 to 90° C and at pH values between 3.5 and 4.5.

3. Process according to one of Claims 1 or 2, characterised in that a growth factor of 5 to 10 is maintained in the formation of α-FeOOH.

4. Process according to Claim 1, characterised in that the hot zinc ferrite clinker is cooled to 400 to 500° C over a period of 2 to 5 minutes.

5. Process according to Claim 1, characterised in that 0.1 to 1.0% by weight, based on the finished pigment, of boric acid, boron phosphate and/or boron-phosphate-forming components are added to the mixture of iron oxide hydroxide and zinc oxide, before annealing, and the cooling is carried out quickly after the annealing.

6. Process according to one of Claims 1 or 5, characterised in that a weight ratio of iron oxide hydroxide to zinc oxide of between 2.0 and 2.1, calculated as $Fe_2O_3:ZnO$, is maintained.

7. Process according to one of Claims 1 or 6, characterised in that, prior to the grinding stage, trimethylolpropane and/or methylhydrogenpolysiloxane or reaction products thereof, are added in quantities of 0.1 to 0.5% by weight, based on the pigment.